# EUROPEAN PATENT APPLICATION

(11) **EP 2 249 539 A1**
(43) Date of publication of application: **10.11.2010**
(21) Application number: 09765368.7
(22) Date of filing: 03.06.2009
(51) Int. Cl.: H04L 29/06

(54) **SIGNAL PROCESSING METHOD AND DEVICE OF MULTI-PROTOCOL SWITCHING NETWORK**

(30) Priority: 16.06.2008 CN 200810115042
(71) Applicant: Huawei Technologies Co., Ltd., Longgang District, Shenzhen Guangdong 518129 (CN)
(72) Inventor: WAN, Huaixue, Longgang District Shenzhen 518129 (CN); LI, Dawei, Longgang District Shenzhen 518129 (CN)
(74) Representative: Kreuz, Georg Maria
(86) International application number: PCT/CN2009/072111
(87) International publication number: WO 2009/152729

(57) **Abstract**

A signal processing method and device of multi-protocol switching network are provided, which belong to the field of network communication. The method enables time division multiplexed (TDM) frames to be transmitted in a form of sub cell information through de-interleaving and slicing processes of the TDM frames. The method and device can switch TDM frames and packets uniformly with a flexible processing manner and low cost, so as to better support the network to evolve from TDM to All IP.

## Description

The application claims the benefit of priority to China Patent Application No. 200810115042.4, filed on June 16, 2008, and entitled "SIGNAL PROCESSING METHOD AND DEVICE OF MULTI-PROTOCOL SWITCHING NETWORK", which is incorporated herein by reference in its entirety.

### FIELD OF THE TECHNOLOGY

The present invention relates to the field of network communication, and more particularly to a method and device for signal processing on a multi-protocol switching network.

### BACKGROUND OF THE INVENTION

Modern communication network more and more adopts the broadband and packet technology. In order to protect operators' investment, it has become a common concern in the industry to make the next generation packet network be compatible with the conventional time division multiplexed (TDM) network. Generally, the TDM adopts the interleaved circuit switching mode, while the packet service adopts continuous packets or cells to perform switching.

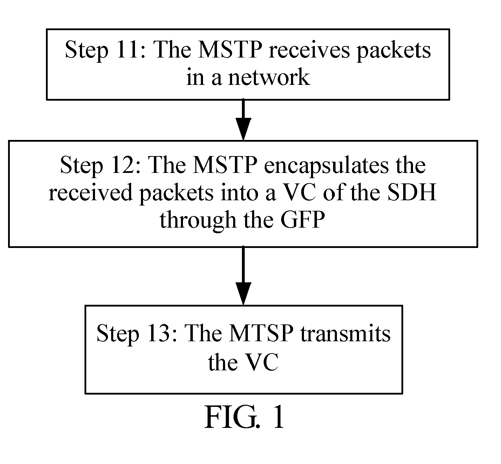

In order to make the packet network be compatible with the TDM network, a method for signal processing on a multi-protocol switching network is provided in the prior art. The method is implemented by a multi-service transmission platform (MSTP) apparatus developed from a synchronous digital hierarchy (SDH) apparatus. Since the MTSP is a processing structure based on the TDM, it is only needed to illustrate how the packet data is processed. Referring to FIG. 1, the method includes the following steps.

In step 11, the MSTP receives packets in a network.

In step 12, the MSTP encapsulates the received packets into a virtual container (VC) of the SDH through the Generic Framing Procedure (GFP).

In step 13, the MTSP transmits the VC.

During the development of the present invention, the inventors find that the method of the prior art has the following problems.

Because the transmitting process is implemented through the VC in the SDH, the granularity in the transmitting process is the size of the VC in the SDH, for example, VC12 provides a service bandwidth granule of approximately 2 M. As a result, data transmission in the network is limited by the size of the VC, so the Ethernet lacks processing flexibility.

### SUMMARY OF THE INVENTION

In view of the above problems in the prior art, the present invention provides a method and device for signal processing on a multi-protocol switching network, which enable data transmission in a network to be not limited by the size of a VC, thereby improving the processing flexibility of the Ethernet.

In an embodiment, the present invention provides a method for signal processing on a multi-protocol switching network. The method includes the following steps. TDM frames and packet data using STM-1 as a unit are uniformly sliced into data that uses a sub cell as a base unit, and egress port information of a switch matrix of the switching network is loaded into a header of the sub cell.

After the data using the sub cell as the base unit is switched, the switched data is reverse sliced into TDM frames and packet data, and is then sent.

In an embodiment, the present invention further provides a signal processing device of a multi-protocol switching network, which includes a slicing unit, a loading unit, a switching unit and a reverse slicing unit.

The slicing unit is configured to uniformly slice TDM frames and packet data using STM-1 as a unit into data using a sub cell as a base unit.

The loading unit is configured to load egress port information of a switch matrix of the switching network into a header of the sub cell.

The switching unit is configured to switch the data using the sub cell as the base unit.

The reverse slicing unit is configured to reverse slice the switched data into TDM frames and packet data and then send the TDM frames and the packet data.

It can be seen from the above technical solutions that in the embodiments of the present invention, TDM frames and packet data using STM-1 as a unit are uniformly sliced into data using a sub cell as a unit, which enables the TDM frames and the packets to be switched with the sub cell as a base unit. As such, the data transmission in the network is not limited by the size of the VC, thereby improving the processing flexibility of the network.

### BRIEF DESCRIPTION OF THE DRAWINGS

FIG. 1 is a flow chart of a method for signal processing on a multi-protocol switching network in the prior art;
FIG. 2 is a flow chart of a method for signal processing on a multi-protocol switching network according to embodiment one of the present invention;
FIG. 3 is a flow chart of a method for signal processing on a multi-protocol switching network according to embodiment two of the present invention;
FIG. 4 is a diagram illustrating the basic mapping relation of STM-4 to four STM-1 in the first embodiment of the present invention; and
FIG. 5 is a structural view of a signal processing device of a multi-protocol switching network according to an embodiment of the present invention.

### DETAILED DESCRIPTION OF THE EMBODIMENTS

In an embodiment, the present invention provides a method for signal processing on a multi-protocol switching network. In the method, TDM frames and packet data using STM-1 as a unit are uniformly sliced to form data using a sub cell as a base unit, the data using the sub cell as the base unit is switched, and is then reverse sliced into TDM frames and packet data using the STM-1 as the unit and is then sent. The method performs switching with the sub cell as the base unit, so data transmission in the network is not limited by the size of a VC, thereby improving the processing flexibility of the network. In addition, the method can simultaneously process the TDM frames and the packets, which is more suitable for the network to evolve from TDM to All IP. Furthermore, during service evolution, the switching network does not need to be altered since the switching apparatus can simultaneously support the TDM and packets, thereby saving cost to some extent.

In order to better describe the embodiments of the present invention, the embodiments of the present invention are illustrated below in detail with reference to the accompanying drawings.

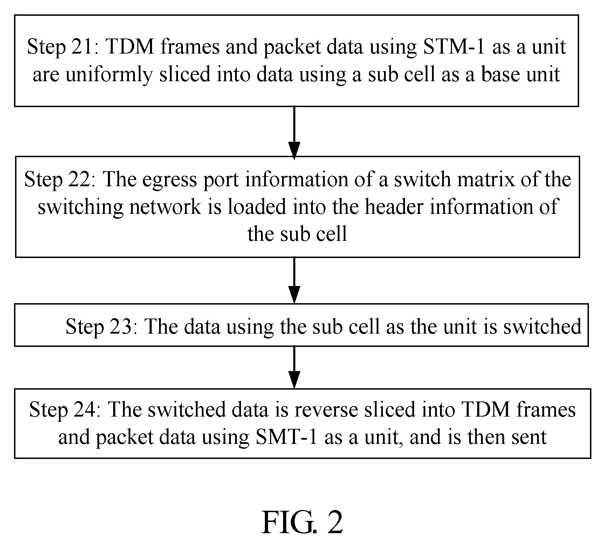

In an embodiment, the present invention provides a method for signal processing on a multi-protocol switching network. Referring to FIG. 2, the method includes the following steps.

In Step 21, TDM frames and packet data using STM-1 as a unit are uniformly sliced into data using a sub cell as a base unit.

The length of the sub cell is generally 16 bytes to 128 bytes. The sub cell includes a cell header and a cell payload; the sub cell header generally includes a type (indicating unicast or multicast), egress port information or multicast index information, and some other extended information. The slicing technology in this step is known in the prior art, and is not described here any more.

In Step 22, the egress port information of a switch matrix of the switching network is loaded into the header information of the sub cell.

The methods for implementing this step includes the following:
Method A: In the case of TDM frames, the egress port information of the switch matrix of the switching network is acquired through a service switching relation of the TDM frames, and the acquired egress port information of the switch matrix of the switching network is loaded into the header information of the sub cell. An actual example is taken to illustrate the steps for implementing the method A. Assume that the first VC4 of STM-16 of a channel A of the switching network is switched to the first VC4 of STM-4 of a channel D, and assume that a virtual port of the first VC4 of STM-16 of the channel A is A1, and the virtual port of the first VC4 of STM-4 of the channel D is D1. A service switching relation from the TDM virtual port Al to D1 is generated. It is known that D1 is the egress port according to the service switching relation, the port information of D1 is acquired, and the port information of D1 is loaded into the header information of the sub cell.
Method B: In the case of packet data, the egress port information of the switch matrix of the switching network is acquired according to the header information of the packets, and the egress port information is then loaded into the header information of the sub cell.

Specific method for implementing the method B may be as follows. If the length of a packet cell entering a switching network interface is the same as the length of the minimum switching unit/sub cell of the switching network, the structure of the cell remains unchanged; if the length of the packet cell of the switching network interface is larger than the length of the minimum switching unit/sub cell of the switching network, the packet cell needs to be sliced into data using the sub cell as the minimum switching unit, and information related to the packet cell header is loaded into the header information of the corresponding sub cell at the same time.

In step 23, the data using the sub cell as the unit is switched.

Specific method for implementing this step may be as follows. Sub cell switching is a universal technology, in which the egress port information in the sub cell header is extracted, and the packets need to be switched after the packets are arbitrated and switching network Crossbar configuration information is generated according to the egress port information.

Before this step, Step 231 may be performed optionally.

In Step 231, in the case of packet data, the data using the sub cell as the unit is arbitrated and/or reverse compressed according to a congestion state of the egress port of the switch matrix of the switching network.

Step 231 ensures that the data sent to the switch matrix of the switching network can be normally switched even if congestion occurs on the egress port of the switch matrix of the switching network, thus avoiding the breakdown of the whole switch matrix of the switching network caused by over-congestion of the egress port. The arbitration and reverse compressing in this step are known in the prior art, and are not described here any more.

In Step 24, the switched data is reverse sliced into TDM frames and packet data using SMT-1 as a unit, and is then sent.

The reverse slicing technology in this step is known in the prior art, and is not described here any more.

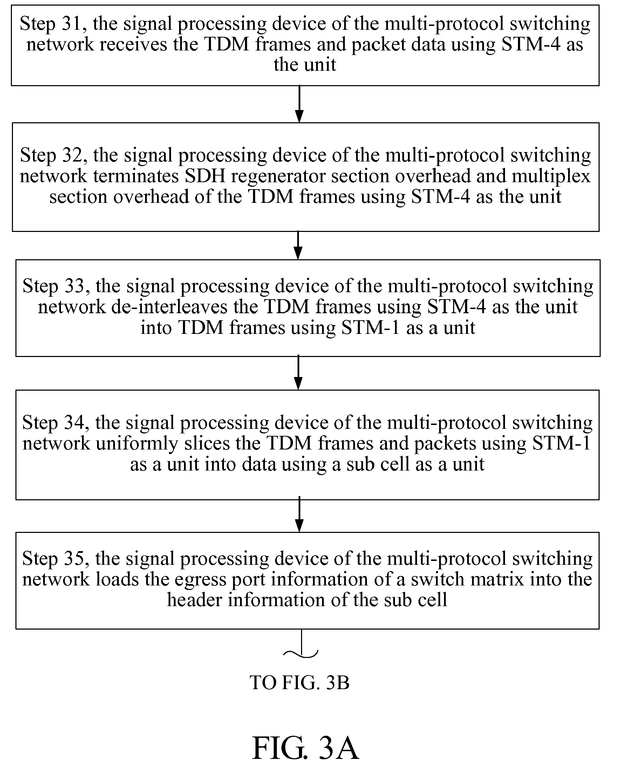

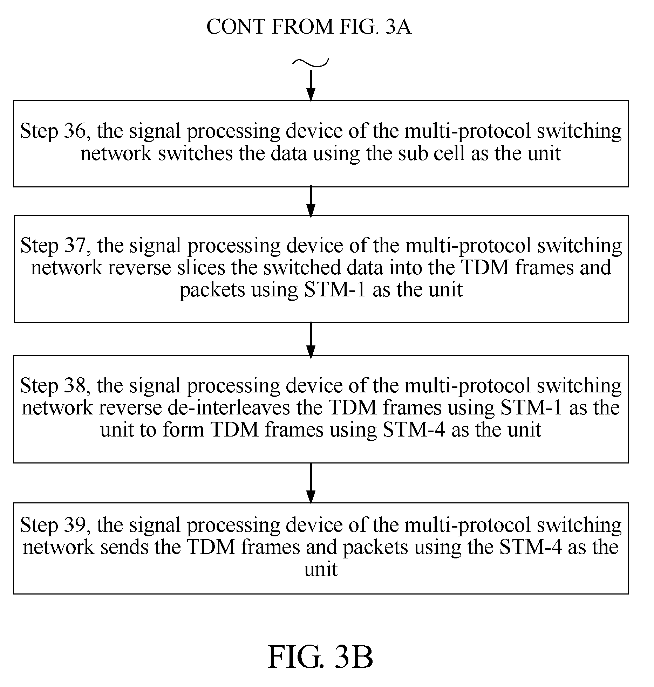

In an embodiment, the present invention further provides another method for signal processing on a multi-protocol switching network. In technical scenario of this embodiment, an operation body is a signal processing device of a multi-protocol switching network, and the original TDM frames received by the device are TDM frames using STM-4 as a unit. The method according to this embodiment is as shown in FIG. 3, which includes the following operations.

In Step 31, the signal processing device of the multi-protocol switching network receives the TDM frames and packet data using STM-4 as the unit.

In Step 32, the signal processing device of the multi-protocol switching network terminates SDH regenerator section overhead and multiplex section overhead of the TDM frames using STM-4 as the unit.

In Step 33, the signal processing device of the multi-protocol switching network de-interleaves the TDM frames using STM-4 as the unit into TDM frames using STM-1 as a unit.

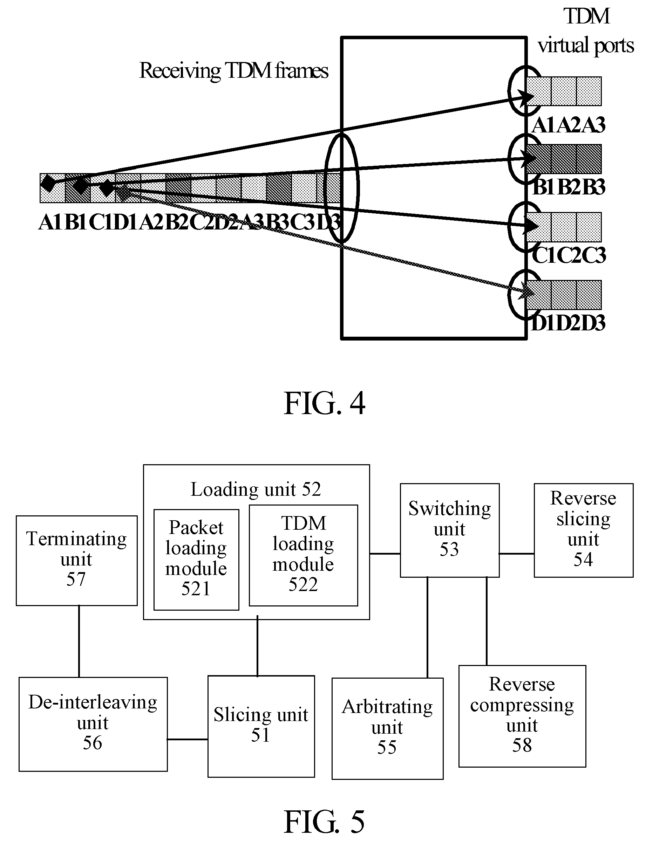

Specific method for implementing this step may be as follows. De-interleave is performed on STM-4 in a form of byte, which is actually TDM virtual port processing, namely, a basic mapping relation from one switching network channel/port STM-4 service to four STM-1 virtual ports as shown in FIG. 4. One STM-4 TDM frame can be de-interleaved into four STM-1 TDM frames according to the basic mapping relation shown in FIG. 4.

In practice, the original TDM frames may also be TDM frames using STM-16 as the unit. In this case, the de-interleaving process is as follows: a STM-16 is de-interleaved into 16 STM-1 virtual ports, and a STM-64 is de-interleaved into 64 STM-1 virtual ports and so on.

In Step 34, the signal processing device of the multi-protocol switching network uniformly slices the TDM frames and packets using STM-1 as a unit into data using a sub cell as a unit.

In this step, the sub cell is the most basic unit, and the length of the sub cell information is determined by configuration information, which is not limited in the embodiments of the present invention.

In Step 35, the signal processing device of the multi-protocol switching network loads the egress port information of a switch matrix into the header information of the sub cell.

The specific method of loading the egress port information of the switch matrix into the header information of the sub cell in this step has been illustrated in detail in an embodiment, and is not described here any more.

In Step 36, the signal processing device of the multi-protocol switching network switches the data using the sub cell as the unit.

In Step 37, the signal processing device of the multi-protocol switching network reverse slices the switched data into the TDM frames and packets using STM-1 as the unit.

In Step 38, the signal processing device of the multi-protocol switching network reverse de-interleaves the TDM frames using STM-1 as the unit to form TDM frames using STM-4 as the unit.

In Step 39, the signal processing device of the multi-protocol switching network sends the TDM frames and packets using the STM-4 as the unit.

In the method according to the embodiment of the present invention, TDM frames and packet data using STM-1 as a unit are uniformly sliced to form data using a sub cell as a base unit, the data using the sub cell as the base unit is switched, and is then reverse sliced into TDM frames and packet data using STM-4 as a unit and is then sent. The method performs switching with the sub cell as the base unit, so data transmission in the network is not limited by the size of a VC, thereby improving the processing flexibility of the network. In addition, the method can simultaneously process the TDM frames and the packets, which is more suitable for the network to evolve from TDM to All IP.

In an embodiment, the present invention further provides a signal processing device of a multi-protocol switching network. Referring to FIG. 5, the device includes a slicing unit 21, configured to uniformly slice TDM frames and packet data using STM-1 as a unit into data using a sub cell as a base unit; a loading unit 52, configured to load egress port information of a switch matrix of the switching network into a header of the sub cell; a switching unit 53, configured to switch the data using the sub cell as the base unit; and a reverse slicing unit 54, configured to reverse slice the switched data into TDM frames and packet data using STM-1 as a unit and then send the TDM frames and packet data.

The loading unit 52 may include a packet loading module 521, configured to acquire the egress port information of the switch matrix of the switching network according to header information of packets if the data is the packets, and load the egress port information of the switch matrix of the switching network into the header of the sub cell; a TDM loading module 522, configured to acquire the egress port information of the switch matrix of the switching network according to a service switching relation of TDM frames using STM-1 as a unit if the data is the TDM frames, and load the egress port information of the switch matrix of the switching network into the header of the sub cell.

The device may further have one or more of the following configurations.

Configuration 1: The device may further include an arbitrating unit 55, configured to arbitrate the data using the sub cell as the unit according to a congestion state of an egress port of a switch matrix of the switching network in the case of packet data; and/or a reverse compressing unit 58, configured to reverse compress the data using the sub cell as the unit according to the congestion state of the egress port of the switch matrix of the switching network in the case of packet data.

Configuration 2: The device may further include a de-interleaving unit 56, configured to de-interleave the TDM frames into TDM frames using STM-1 as the unit. Specific operation method about the de-interleaving is described in the method embodiments of the present invention.

If the configuration 2 is selected, the device may further include a terminating unit 57.

The terminating unit 57 is configured to terminate SDH regenerator section overhead and multiplex section overhead before de-interleaving is performed by the de-interleaving unit and if the received signals are identified as the TDM frames.

In the device according to the embodiment of the present invention, TDM frames and packet data using STM-1 as a unit are uniformly sliced into data using a sub cell as a base unit by the slicing unit 51, the loading unit 52 loads the egress port information of the switch matrix of the switching network into the header of the sub cell, the switching unit 53 switches the data using the sub cell as the base unit, and the reverse slicing unit 54 reverse slices the switched data into the TDM frames and packet data using STM-1 as the unit and then sends the TDM frames and packet data. The device performs switching with the sub cell as the base unit, so data transmission in the network is not limited by the size of a VC, thereby improving the processing flexibility of the network. In addition, the method can simultaneously process the TDM frames and the packets, which is more suitable for the network to evolve from TDM to All IP.

It can be seen that the technical solutions provided by the embodiments of the present invention have the advantages of improving the processing flexibility of the network and being more suitable for the network to evolve from TDM to All IP.

The above descriptions are merely preferred embodiments of the present invention, but not intended to limit the scope of the present invention. Any modification, equivalent replacement, or improvement made without departing from the principle of the present invention should fall within the scope of the present invention. Therefore, the protection scope of the present invention is subject to the appended claims.

## Claims

1. A method for signal processing on a multi-protocol switching network, comprising:
uniformly slicing time division multiplexed (TDM) frames and packet data into data using a sub cell as a base unit, wherein the TDM frames and packet data use STM-1 as a unit;
loading egress port information of a switch matrix of the multi-protocol switching network into a header of the sub cell;switching the data using the sub cell as the base unit;
reverse slicing the switched data into TDM frames and packet data; and
sending the TDM frames and packet data.

2. The method according to claim 1, wherein the loading the egress port information of the switch matrix of the multi-protocol switching network into the header of the sub cell comprises:
if the data is the packet data, acquiring the egress port information of the switch matrix of the multi-protocol switching network according to header information of packets, and loading the egress port information of the switch matrix of the multi-protocol switching network into the header of the sub cell; and
if the data is the TDM frames using the STM-1 as the unit, acquiring the egress port information of the switch matrix of the multi-protocol switching network according to a service switching relation of the TDM frames, and loading the egress port information of the switch matrix of the multi-protocol switching network into the header of the sub cell.

3. The method according to claim 1, wherein before the switching the sub cells, the method further comprises:
arbitrating and/or reverse compressing the data using the sub cell as the unit according to a congestion state of an egress port of a switch matrix of the switching network in the case of the packet data.

4. The method according to claim 1, wherein the TDM frames using the STM-1 as the unit comprises:
de-interleaving the TDM frames into the TDM frames using the STM-1 as the unit.

5. The method according to claim 4, wherein before the de-interleaving the TDM frames into the TDM frames using the STM-1 as the unit, the method further comprises:
terminating synchronous digital hierarchy (SDH) regenerator section overhead and
multiplex section overhead if the received signals are identified as the TDM frames.

6. The method according to claim 1, wherein after the reverse slicing the switched data into the TDM frames and packet data and then sending the TDM frames and the packet data, the method further comprises:
reverse de-interleaving the TDM frames using the STM-1 as the unit to form TDM frames using STM-4 or reverse de-interleaving STM-16 as a unit after reverse slicing the switched data into the TDM frames using the STM-1 as the unit; and then sending the TDM frames and the packet data using the STM-4 or STM-16 as the unit.

7. A signal processing device of a multi-protocol switching network, comprising:
a slicing unit, configured to uniformly slice TDM frames and packet data into data using a sub cell as a base unit, wherein the TDM frames and the packet data use STM-1 as a unit;
a loading unit, configured to load egress port information of a switch matrix of the multi-protocol switching network into a header of the sub cell;
a switching unit, configured to switch the data using the sub cell as the base unit; and
a reverse slicing unit, configured to reverse slice the switched data into TDM frames and packet data and then send the TDM frames and the packet data.

8. The device according to claim 7, wherein the loading unit comprises:
a packet loading module, configured to acquire the egress port information of the switch matrix of the s multi-protocol switching network according to the header information of packets, and load the egress port information of the switch matrix of the multi-protocol switching network into the header of the sub cell if the data is the packets; and
a TDM loading module, configured to acquire the egress port information of the switch matrix of the multi-protocol switching network according to a service switching relation of the TDM frames, and load the egress port information of the switch matrix of the multi-protocol switching network into the header of the sub cell if the data is the TDM frames using the STM-1 as the unit.

9. The device according to claim 7, further comprising:
an arbitrating unit, configured to arbitrate the data using the sub cell as the unit according to a congestion state of an egress port of a switch matrix of the multi-protocol switching network in the case of the packet data; and/or
a reverse compressing unit, configured to reverse compress the data using the sub cell as the unit according to the congestion state of the egress port of the switch matrix of the multi-protocol switching network in the case of the packet data.

10. The device according to claim 7, further comprising:
a de-interleaving unit, configured to de-interleave the TDM frames into the TDM frames using the STM-1 as the unit.

11. The device according to claim 7, further comprising:
a terminating unit, configured to terminate synchronous digital hierarchy (SDH) regenerator section overhead and multiplex section overhead before de-interleaving is performed by the de-interleaving unit and if the received signals are identified as the TDM frames.
